# EUROPÄISCHE PATENTSCHRIFT

(11) **EP 2 783 123 B1**
(45) Veröffentlichungstag und Bekanntmachung des Hinweises auf die Patenterteilung: **01.08.2018**
(21) Anmeldenummer: 12805919.3
(22) Anmeldetag: 25.10.2012
(51) Int. Cl.: F16D 21/06, F16F 15/131

(54) **DREHMOMENTÜBERTRAGUNGSEINRICHTUNG**
TORQUE TRANSMITTER
DISPOSITIF DE TRANSMISSION DE COUPLE DE ROTATION

(30) Priorität: 22.11.2011 DE 102011086879; 22.11.2011 DE 102011086883; 22.11.2011 DE 102011086882; 07.02.2012 DE 102012201758
(43) Veröffentlichungstag der Anmeldung: 01.10.2014
(73) Patentinhaber: Schaeffler Technologies AG & Co. KG, 91074 Herzogenaurach (DE)
(72) Erfinder: KIMMIG, Karl-Ludwig, 77883 Ottenhöfen (DE); HOPPE, Marcus, 77855 Achern (DE); GAUS, Ulrich, 76437 Rastatt (DE)
(86) Internationale Anmeldenummer: PCT/DE2012/001032
(87) Internationale Veröffentlichungsnummer: WO 2013/075685

(56) Entgegenhaltungen:
- WO-A1-2007/062618
- DE-A1-102008 002 500
- DE-A1-102009 059 929

## Beschreibung

Die Erfindung betrifft eine Drehmomentübertragungseinrichtung für einen Antriebsstrang eines brennkraftmaschinengetriebenen Kraftfahrzeugs aufweisend einen Drehschwingungsdämpfer, insbesondere ein Zweimassenschwungrad, eine Reibungskupplungseinrichtung, insbesondere eine Doppelkupplung, und eine zwischen dem Drehschwingungsdämpfer und der Reibungskupplungseinrichtung angeordnete Reibeinrichtung.

Aus der DE 10 2009 059 929 A1 ist ein Kupplungsaggregat bekannt für einen Antriebsstrang mit einer Antriebseinheit und einem nachfolgend angeordneten Getriebe mit zumindest einer in einem von der Antriebseinheit angetriebenen, aus zwei während der Montage des Kupplungsaggregats am Außenumfang verbundenen Gehäuseteilen gebildeten Gehäuse angeordneten Nasskupplung und einem zwischen dem Gehäuse und einem Eingangsteil der zumindest einen Nasskupplung angeordneten Drehschwingungsdämpfer mit über den Umfang verteilten, in Umfangsrichtung einerseits von dem Gehäuse und andererseits von dem Eingangsteil beaufschlagten Energiespeichern, bei dem vor dem Zusammenfügen der Gehäuseteile die Energiespeicher in einem der Gehäuseteile verliersicher aufgenommen sind und die zumindest eine Nasskupplung vor dem Zusammenfügen der Gehäuseteile montiert wird, um ein Kupplungsaggregat vorzusehen, das aus einzelnen, vorgefertigten Baueinheiten während der Endmontage zusammengesetzt wird. Gemäß der DE 10 2009 059 929 A1 kann zwischen dem Drehschwingungsdampfer und dem Eingangsteil der Nasskupplungen eine Reibeinrichtung vorgesehen sein. Hierzu kann mittels über den Umfang verteilter, axial erhabener Stifte eines Lamellenträgers ein Reibring beaufschlagt werden, der mittels eines an dem Gehäuseteil befestigten Halterings zentriert und mittels des axial wirksamen Energiespeichers gegenüber diesem verspannt ist.

Aus der WO07062618 A1 ist bereits eine Doppelkupplung bekannt, welches über ein Zweimassenschwungrad mit einer Brennkraftmaschine verbunden ist. Der Ausgangsflansch des Zweimassenschwungrades ist mit einem Eingangsteil der Doppelkupplung verbunden, wobei zwischen diesen beiden Teilen eine Reibeinrichtung vorgesehen ist.

Der Erfindung liegt die Aufgabe zugrunde, eine eingangs genannte Drehmomentübertragungseinrichtung baulich und/oder funktional zu verbessern.

Die Lösung der Aufgabe erfolgt mit einer Drehmomentübertragungseinrichtung für einen Antriebsstrang eines brennkraftmaschinengetriebenen Kraftfahrzeugs gemäß Anspruch 1, aufweisend einen Drehschwingungsdämpfer, insbesondere ein Zweimassenschwungrad, eine Reibungskupplungseinrichtung, insbesondere eine Doppelkupplung, und eine zwischen dem Drehschwingungsdämpfer und der Reibungskupplungseinrichtung angeordnete Reibeinrichtung, bei der die Reibeinrichtung zur Dämpfung von Axialschwingungen wirksam ist.

Das Kraftfahrzeug kann eine Brennkraftmaschine aufweisen. Der Antriebsstrang kann zwischen der Brennkraftmaschine und wenigstens einem antreibbaren Rad des Kraftfahrzeugs gebildet sein. Der Antriebsstrang kann ein Getriebe aufweisen. Die Drehmomentübertragungseinrichtung kann zwischen der Brennkraftmaschine und dem Getriebe angeordnet sein. Der Drehschwingungsdämpfer kann mit der Brennkraftmaschine antriebsverbunden sein. Die Reibungskupplungseinrichtung kann mit dem Getriebe antriebsverbunden sein.

Der Drehschwingungsdämpfer weist ein Eingangsteil auf. Der Drehschwingungsdämpfer kann ein Ausgangsteil aufweisen. Die Bezeichnungen "Eingangsteil" und "Ausgangsteil" sind auf einem Leistungsfluss von der Brennkraftmaschine zu dem wenigstens einem antreibbaren Rad bezogen. Das Eingangsteil und das Ausgangsteil des Drehschwingungsdämpfers können relativ zueinander begrenzt verdrehbar sein. Zwischen dem Eingangsteil und dem Ausgangsteil des Drehschwingungsdämpfers kann eine Feder-Dämpfer-Einrichtung angeordnet sein. Die Feder-Dämpfer-Einrichtung kann wenigstens einen Energiespeicher aufweisen. Der wenigsten eine Energiespeicher kann eine Feder, wie Bogenfeder, sein. Die Feder-Dämpfer-Einrichtung kann eine Reibeinrichtung aufweisen. Das Eingangsteil des Drehschwingungsdämpfers kann mit einer Ausgangswelle der Brennkraftmaschine antriebsverbunden sein. Das Ausgangsteil des Drehschwingungsdämpfers kann mit der Reibeinrichtung antriebsverbunden sein.

Die Reibungskupplungseinrichtung kann ein Eingangsteil aufweisen. Das Eingangsteil der Reibungskupplungseinrichtung kann ein Gehäuse aufweisen. Das Eingangsteil der Reibungskupplungseinrichtung kann eine Gegendruckplatte aufweisen. Das Eingangsteil der Reibungskupplungseinrichtung kann eine Zwischendruckplatte aufweisen. Das Eingangsteil der Reibungskupplungseinrichtung kann eine Anpressplatte aufweisen. Die Reibungskupplungseinrichtung kann wenigstens ein Ausgangsteil aufweisen. Das wenigstens eine Ausgangsteil der Reibungskupplungseinrichtung kann wenigstens eine Kupplungsscheibe aufweisen. Die Reibungskupplungseinrichtung kann ein erstes Ausgangsteil und ein zweites Ausgangsteil aufweisen. Das erste Ausgangsteil der Reibungskupplungseinrichtung kann eine erste Kupplungsscheibe aufweisen. Die erste Kupplungsscheibe kann zwischen der Gegendruckplatte und der Zwischendruckplatte angeordnet sein. Das zweite Ausgangsteil der Reibungskupplungseinrichtung kann eine zweite Kupplungsscheibe aufweisen. Die zweite Kupplungsscheibe kann zwischen der Zwischendruckplatte und der Anpressplatte angeordnet sein.

Das Getriebe kann wenigstens eine Eingangswelle aufweisen. Das Getriebe kann eine erste Eingangswelle und eine zweite Eingangswelle aufweisen. Die erste Eingangswelle und eine zweite Eingangswelle können koaxial angeordnet sein. Die erste Eingangswelle und eine zweite Eingangswelle können konzentrisch angeordnet sein. Die zweite Eingangswelle kann eine Hohlwelle sein und die erste Eingangswelle kann innerhalb der zweiten Eingangswelle angeordnet sein. Die erste Kupplungsscheibe kann an der ersten Eingangswelle drehfest angeordnet sein. Die zweite Kupplungsscheibe kann an der zweiten Eingangswelle drehfest angeordnet sein. Das Eingangsteil der Reibungskupplungseinrichtung kann an der zweiten Eingangswelle drehbar gelagert sein. Das Eingangsteil der Reibungskupplungseinrichtung kann an der zweiten Eingangswelle sowohl axial als auch radial gelagert sein. Das Eingangsteil der Reibungskupplungseinrichtung kann mit seiner Zwischendruckplatte an der zweiten Eingangswelle drehbar gelagert sein. Das Getriebe kann wenigstens eine Schrägverzahnung aufweisen.

Das Eingangsteil und das wenigstens eine Ausgangsteil der Reibungskupplungseinrichtung können miteinander reibschlüssig antriebsverbindbar sein. Die Reibungskupplungseinrichtung kann eine Betätigungseinrichtung aufweisen. Mithilfe der Betätigungseinrichtung können das Eingangsteil und das wenigstens eine Ausgangsteil der Reibungskupplungseinrichtung miteinander antriebsverbunden oder voneinander antriebsgetrennt werden. Ein Leistungsfluss kann im übergehenden Wechsel zwischen dem Eingangsteil und dem ersten Ausgangsteil der Reibungskupplungseinrichtung einerseits und dem Eingangsteil und dem zweite Ausgangsteil der Reibungskupplungseinrichtung andererseits übergebbar sein. Die Betätigungseinrichtung kann zu dem Gehäuse der Reibungskupplungseinrichtung fest angeordnet sein. Die Betätigungseinrichtung kann in axialer Richtung wirksam sein. Das Eingangsteil der Reibungskupplungseinrichtung kann mit der Reibeinrichtung antriebsverbunden sein.

Die Drehmomentübertragungseinrichtung kann eine Drehachse aufweisen. Axialschwingungen können in Erstreckungsrichtung der Drehachse gerichtete Schwingungen sein. Axialschwingungen können bei einem Betrieb der Drehmomentübertragungseinrichtung angeregt sein. Axialschwingungen können insbesondere von der Reibungskupplungseinrichtung und/oder von dem Getriebe angeregt sein. Bei einem Betrieb der Drehmomentübertragungseinrichtung können Drehschwingungen angeregt sein. Drehschwingungen können Drehschwingungen um die Drehachse sein. Drehschwingungen können insbesondere von der Brennkraftmaschine und/oder von dem Drehschwingungsdämpfer angeregt sein. Axialschwingungen und Drehschwingungen können über das Getriebe und/oder über die gehäusefeste Betätigungseinrichtung der Reibungskupplungseinrichtung gekoppelt sein.

In der Reibeinrichtung kann bei Auftreten von Axialschwingungen eine Reibkraft auftreten. Die Reibkraft kann eine Dämpfung von Axialschwingungen bewirken.

Mit der erfindungsgemäßen Drehmomentübertragungseinrichtung wird verhindert, dass sich Axialschwingungen und Drehschwingungen gegenseitig verstärken und/oder eine gegenseitige Beeinflussung reduziert. Insbesondere während Schlupfphasen der Reibungskupplungseinrichtung werden unerwünschte Geräusche reduziert oder vermieden. Die Lösung ist platzsparend. Die Lösung ist kostengünstig.

Die Reibeinrichtung weist ein erstes Reibmodul, das dem Drehschwingungsdämpfer zugeordnet ist, und ein zweites Reibmodul, das der Reibungskupplungseinrichtung zugeordnet ist, auf und das erste Reibmodul und das zweite Reibmodul sind in axialer Richtung relativ zueinander verlagerbar. Eine axiale Richtung kann eine der Erstreckungsrichtung der Drehachse entsprechende Richtung sein. Das erste Reibmodul kann eine Reibfläche aufweisen. Das zweite Reibmodul kann eine Reibfläche aufweisen. Eine Reibfläche kann eine Oberfläche mit einem erhöhten Reibwert aufweisen. Eine Reibfläche kann eine profilierte Oberfläche aufweisen. Eine Reibfläche kann ein Reibmaterial aufweisen. Die Reibflächen des ersten Reibmoduls und des zweiten Reibmoduls können miteinander zusammenwirken. Die Reibflächen des ersten Reibmoduls und des zweiten Reibmoduls können aneinander anliegen. Zwischen der Reibfläche des ersten Reibmoduls und der Reibfläche des zweiten Reibmoduls kann eine Normalkraft wirken. Die Normalkraft kann zu einer Kontaktfläche zwischen der Reibfläche des ersten Reibmoduls und der Reibfläche des zweiten Reibmoduls senkrecht gerichtet sein.

Der Drehschwingungsdämpfer weist ein Eingangsteil auf, das mithilfe wenigstens eines Verbindungsmittels mit der Brennkraftmaschine verbunden ist und das erste Reibmodul ist mithilfe des wenigstens eines Verbindungsmittels mit dem Eingangsteil des Drehschwingungsdämpfers verbunden. Das erste Reibmodul ist mit dem Eingangsteil des Drehschwingungsdämpfers verbunden. Das erste Reibmodul kann mit der Brennkraftmaschine verbunden sein. Das Eingangsteil des Drehschwingungsdämpfers kann einen Flanschabschnitt aufweisen. Das Eingangsteil des Drehschwingungsdämpfers kann mit seinem Flanschabschnitt mit der Brennkraftmaschine verbunden sein. Der Flanschabschnitt kann wenigstens einen Durchgang für das wenigstens eine Verbindungsmittel aufweisen. Der wenigstens eine Durchgang kann eine Bohrung sein. Das wenigstens eine Verbindungsmittel kann eine Schraube sein. Das wenigstens eine Verbindungsmittel kann einen Schaft und einen Kopf aufweisen. Der Kopf kann das erste Reibmodul halten. Die Drehmomentübertragungseinrichtung kann mehrere Verbindungsmittel aufweisen. Die mehreren Verbindungsmittel können in Umfangsrichtung der Drehmomentübertragungseinrichtung verteilt angeordnet sein.

Das erste Reibmodul kann einen Scheibenabschnitt und einen an dem Scheibenabschnitt radial außen angeordneten Federabschnitt aufweisen. Eine radiale Richtung kann eine zur Drehachse senkrechte Richtung sein. Das erste Reibmodul kann mit seinem Scheibenabschnitt mit dem Eingangsteil des Drehschwingungsdämpfers verbunden sein. Der Scheibenabschnitt kann wenigstens einen Durchgang für das wenigstens eine Verbindungsmittel aufweisen. Der wenigstens eine Durchgang kann eine Bohrung sein. Der Kopf des wenigstens eine Verbindungsmittels kann das erste Reibmodul halten. Der Federabschnitt kann mehrere Federelemente aufweisen. Die Federelemente können jeweils zungenartig ausgebildet sein. Die Federelemente können jeweils in einem Verbindungsabschnitt mit dem Scheibenabschnitt verbunden sein und einen freien Endabschnitt aufweisen. Die Federelemente können jeweils eine gebogene oder gewinkelte Form aufweisen. Die Federelemente können sich im Wesentlichen in Erstreckungsrichtung der Drehachse erstrecken. Die Federelemente können mit ihren freien Endabschnitt zu der Reibungskupplungseinrichtung hin gerichtet angeordnet sein. Die Reibfläche des ersten Reibmoduls kann an den Federelementen angeordnet sein. Die Reibfläche des ersten Reibmoduls kann an den Federelementen radial außenseitig angeordnet sein. Die Federelemente können jeweils nach radial außen vorgespannt sein.

Die Reibungskupplungseinrichtung kann ein Eingangsteil mit einem Mitnahmeabschnitt aufweisen und das zweite Reibmodul kann an dem Mitnahmeabschnitt angeordnet oder ausgebildet sein. Der Mitnahmeabschnitt kann an dem Gehäuse der Reibungskupplungseinrichtung angeordnet sein. Der Mitnahmeabschnitt kann mit dem Drehschwingungsdämpfer mitnehmend verbunden sein. Der Mitnahmeabschnitt kann mit dem Ausgangsteil des Drehschwingungsdämpfers mitnehmend verbunden sein. Der Mitnahmeabschnitt kann eine hohlzylinderartige Form aufweisen. Das zweite Reibmodul kann an dem Mitnahmeabschnitt radial innenseitig angeordnet oder ausgebildet sein.

Das zweite Reibmodul kann eine ringartige Form aufweisen. Das zweite Reibmodul kann einen rechteckartigen Querschnitt aufweisen. Das zweite Reibmodul kann eine Innenfläche aufweisen. Die Reibfläche des zweiten Reibmoduls kann an der Innenfläche angeordnet sein. Das zweite Reibmodul kann eine Außenfläche aufweisen. Mit der Außenfläche kann das zweite Reibmodul an dem Mitnahmeabschnitt des Eingangsteils der Reibungskupplungseinrichtung angeordnet sein. Das zweite Reibmodul kann zwei Seitenflächen aufweisen.

Das zweite Reibmodul kann in radialer Richtung relativ zu dem Mitnahmeabschnitt des Eingangsteils der Reibungskupplungseinrichtung verlagerbar angeordnet sein. Das zweite Reibmodul kann an dem Mitnahmeabschnitt in axialer Richtung fest angeordnet sein. An dem Mitnahmeabschnitt können ein Mitnahmering und eine Stützfeder angeordnet sein und das zweite Reibmodul kann zwischen dem Mitnahmering und der Stützfeder angeordnet sein. Der Mitnahmering kann mit dem Mitnahmeabschnitt fest, insbesondere drehfest, verbunden sein. Der Mitnahmering kann einen scheibenartigen Abschnitt aufweisen. Die Stützfeder kann eine Tellerfeder sein. Die Stützfeder kann eine in axialer Richtung wirksame Federkraft erzeugen. Die Stützfeder kann sich einerseits an dem Mitnahmeabschnitt und andererseits an dem zweiten Reibmodul abstützen. Mithilfe der Stützfeder kann das zweite Reibmodul gegen den Mitnahmering, insbesondere gegen den scheibenartigen Abschnitt des Mitnahmerings, vorgespannt sein. Das zweite Reibmodul kann in radialer Richtung relativ zu der Stützfeder und dem Mitnahmering, insbesondere zu dem scheibenartigen Abschnitt des Mitnahmerings, verlagerbar sein. Damit wird ein eventuell vorhandener Achsversatz zwischen der Brennkraftmaschine und/oder dem Drehschwingungsdämpfer einerseits und der Reibungskupplungseinrichtung und/oder dem Getriebe andererseits ausgeglichen.

Das zweite Reibmodul kann einen axialen Gleitabschnitt aufweisen. Der axiale Gleitabschnitt kann radial innen angeordnet sein. Der axiale Gleitabschnitt kann eine Innenfläche aufweisen. Die Reibfläche des zweiten Reibmoduls kann an der Innenfläche angeordnet sein. Der axiale Gleitabschnitt kann einen kufenartigen Querschnitt aufweisen. Das zweite Reibmodul kann einen radialen Gleitabschnitt aufweisen. Der radiale Gleitabschnitt kann zwei Seitenflächen aufweisen. Das zweite Reibmodul kann mit den Seitenflächen seines radialen Gleitabschnitts zwischen der Stützfeder und dem Mitnahmering, insbesondere dem scheibenartigen Abschnitt des Mitnahmerings, angeordnet sein. Der radiale Gleitabschnitt kann einen U-artigen Querschnitt aufweisen. Das zweite Reibmodul kann zu dem Mitnahmeabschnitt des Eingangsteils der Reibungskupplungseinrichtung verdrehbar sein. Damit wird eine Reibkraft, insbesondere eine durch Schwingwinkel am Drehschwingungsdämpfer bedingte Reibkraft, in Umfangsrichtung ausgeglichen.

Das zweite Reibmodul kann einen Außenring und einen zu dem Außenring relativ verdrehbaren Innenring aufweisen. Der Außenring kann einen rechteckartigen Querschnitt aufweisen. Der Außenring kann eine Innenfläche aufweisen. Der Innenring kann einen rechteckartigen Querschnitt aufweisen. Der Innenring kann eine Außenfläche aufweisen. Die Innenfläche des Außenrings und die Außenfläche des Innenrings können eine Gleitpaarung bilden. Der Außenring und der Innenring können zueinander verdrehbar sein. Der Außenring und der Innenring können zueinander in axialer Richtung begrenzt verschiebbar sein. Der Außenring und der Innenring können zueinander in axialer Richtung um ca. 0,5-2 mm, insbesondere um ca. 1 mm, verschiebbar sein. Die Innenfläche des Außenrings und die Außenfläche des Innenrings können eine Reibpaarung mit einem Reibbeiwert in Umfangsrichtung und einem Reibbeiwert in axialer Richtung bilden. Der Reibbeiwert in axialer Richtung kann größer sein als der Reibbeiwert in Umfangsrichtung. Damit wird eine Dämpfung im Wesentlichen in axialer Richtung erzielt. Der Innenring kann eine Innenfläche aufweisen. Die Reibfläche des zweiten Reibmoduls kann an der Innenfläche des Innenrings angeordnet sein. Der Außenring kann eine Außenfläche aufweisen. Mit der Außenfläche des Außenrings kann das zweite Reibmodul an dem Mitnahmeabschnitt des Eingangsteils der Reibungskupplungseinrichtung angeordnet sein.

Der Außenring kann an dem Mitnahmeabschnitt angeordnet sein und den Innenring in axialer Richtung sichern. Der Außenring kann zwei Seitenflächen aufweisen. Der Außenring kann mit einer Seitenfläche an dem Mitnahmering, insbesondere dem scheibenartigen Abschnitt des Mitnahmerings, angeordnet sein. Der Außenring kann einen nach radial innen gerichteten Bund mit einer axialen Anlagefläche aufweisen. Der Bund kann an der zu der Reibungskupplungseinrichtung weisenden Seite des Außenrings angeordnet sein. Der Innenring kann zwei Seitenflächen aufweisen. Der Innenring kann mit einer Seitenfläche an dem Mitnahmering, insbesondere dem scheibenartigen Abschnitt des Mitnahmerings, angeordnet sein. Der Innenring kann mit der anderen Seitenfläche an dem Bund des Außenrings angeordnet sein.

Die Lösung der Aufgabe kann mit einer Reibeinrichtung zur Dämpfung von Axialschwingungen erfolgen, insbesondere bei einer auf einer Getriebehohlwelle gelagerten Doppelkupplung. Die Lösung der Aufgabe kann mit einer Doppelkupplung mit einer derartigen Reibeinrichtung erfolgen. Die Lösung der Aufgabe kann mit einem Antriebsstrang mit einem Torsionsschwingungsdämpfer, einer auf einer Getriebehohlwelle gelagerten Doppelkupplung und einer derartigen Reibeinrichtung erfolgen.

Die Lösung der Aufgabe kann mit einer Reibeinrichtung mit einer Reibfeder und einem axialen Gleitlager zur Dämpfung von Axialschwingungen und zum Ausgleich von Achsversatz erfolgen, insbesondere bei einer auf einer Getriebehohlwelle gelagerten Doppelkupplung. Die Lösung der Aufgabe kann mit Doppelkupplung mit einer derartigen Reibeinrichtung erfolgen. Die Lösung der Aufgabe kann mit einem Antriebsstrang mit einem Torsionsschwingungsdämpfer, einer auf einer Getriebehohlwelle gelagerten Doppelkupplung und einer derartigen Reibeinrichtung erfolgen.

Die Lösung der Aufgabe kann mit einer Reibeinrichtung mit einer Reibfeder und einem radialen Gleitlager zur Dämpfung von Axialschwingungen und zur Reduzierung von in Umfangsrichtung durch den Schwingwinkel eines Torsionsschwingungsdämpfers entstehenden Reibkräften erfolgen, insbesondere bei einer auf einer Getriebehohlwelle gelagerten Doppelkupplung. Die Lösung der Aufgabe kann mit einer Doppelkupplung mit einer derartigen Reibeinrichtung erfolgen. Die Lösung der Aufgabe kann mit einem Antriebsstrang mit einem Torsionsschwingungsdämpfer, einer auf einer Getriebehohlwelle gelagerten Doppelkupplung und einer derartigen Reibeinrichtung erfolgen.

Zur genaueren Information über die Merkmale der vorliegenden Erfindung wird ausdrücklich auf die deutschen Patentanmeldungen Nr. 10 2011 086 879.8, 10 2011 086 882.8 und 10 2011 086 883.6 verwiesen. Die Lehren dieser Patentanmeldungen sind als Bestandteil des vorliegenden Dokuments anzusehen. Merkmale dieser Patentanmeldungen sind Merkmale des vorliegenden Dokuments.

Zusammenfassend und mit anderen Worten dargestellt ergibt sich somit durch die Erfindung unter anderem eine Dämpfungseinrichtung für Doppelkupplungen gegen Axialschwingungen. Zwischen einem Bogenfederdämpfer, welcher an einer Kurbelwelle befestigt ist, und der Doppelkupplung, welche auf einer Getriebehohlwelle gelagert (befestigt) ist, kann eine axiale Reibeinrichtung angeordnet sein. Die axiale Reibeinrichtung soll Axialschwingungen der Doppelkupplung mit der Getriebehohlwelle dämpfen, sodass keine Selbstverstärkung mit Torsionsschwingungen auftreten kann. Eine Reibfeder kann zwischen einem Primärblech der Dämpfungseinrichtung und Kurbelwellenbefestigungsschrauben angeordnet sein. Zwischen der Reibfeder und den Kurbelwellenbefestigungsschrauben kann noch eine zusätzliche Deckscheibe angeordnet sein. Die Reibfeder kann die Funktion einer Deckscheibe mit übernehmen. Die Reibfeder kann in Verbindung mit einer Befestigung an Motor/Dämpfungseinrichtung so ausgeführt sein, dass eine hohe Axialsteifigkeit und gleichzeitig eine geringe Radialsteifigkeit (bezogen auf einen Reibkontakt an der Doppelkupplung) gegeben ist. Die geringe Radialsteifigkeit kann einerseits Montagekräfte gering halten und andererseits einen Toleranzausgleich für Achsversatz zwischen Motor und Getriebe gewährleisten. Die Reibfeder kann so gestaltet sein, dass ein einfaches Fügen von Motor und Getriebe möglich ist. Dies kann mit einem flachen Einfädelwinkel von beispielsweise 5-20 Grad erreicht werden. Eine Gegenreibfläche der Reibfeder kann an einem Mitnehmerring (Mitnehmergussmasse) der Doppelkupplung im Bereich eines zylindrischen Innendurchmessers erfolgen. Die Reibfläche kann zur Optimierung von Reibwert und Verschleiß dafür speziell gestaltet sein, z.B. einsatzgehärtet, nitriert oder verchromt. Es kann zur Optimierung ein zusätzlicher Zwischenring aus Kunststoff oder gehärtetem Stahl zum Einsatz kommen. Eine radiale Vorspannung kann so dimensioniert sein, dass eine axiale Reibkraft zwischen 20 und 200 N liegt.

Es kann ein axiales Gleitlager zum Ausgleich von Achsversatz zwischen Motor und Getriebe integriert sein. Ein Reibring kann in der Doppelkupplung montiert sein. An einem Zweimassenschwungrad kann ein Reibbügel angeordnet sein. Der Reibring kann und als Reibpartner Reibbügel dienen. Der Reibring durch ein axiales Gleitlager mit radialem Spiel ergänzt sein. Der Reibring kann "radial schwimmend" zwischen einem Mitnehmerkranz (Verzahnungsteil) und einer Stützfeder, welche beide am Mitnehmerring befestigt sein können, gelagert sein. Dadurch kann sowohl eine Reibkraft in Umfangsrichtung (Schwingwinkel am Zweimassenschwungrad) wie auch ein Achsversatz zwischen Motor und Getriebe ausgeglichen werden.

Es kann ein Gleitlager integriert sein. Der Reibring kann durch ein radiales Gleitlager ergänzt sein. Dazu kann der Reibring zweiteilig ausgeführt sein. Der Reibring kann aus einem Außenring und einem Innenring bestehen. Der Außenring kann in einen Mitnehmerring eingeclipst sein. Der Innenring kann als Reibpartner zu einem Reibbügel dienen. Der Außenring kann zur axialen Sicherung des Innenrings dienen.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine Drehmomentübertragungseinrichtung mit einem Zweimassenschwungrad, einer Doppelkupplung und einer zwischen dem Zweimassenschwungrad und der Doppelkupplung angeordneten Reibeinrichtung zur Dämpfung von Axialschwingungen in perspektivischer Schnittdarstellung,
- Fig. 2: ein erstes Reibmodul einer Reibeinrichtung in perspektivischer Darstellung,
- Fig. 3: ein zweites zweiteiliges Reibmodul einer Reibeinrichtung an einem Mitnahmeabschnitt einer Doppelkupplung in perspektivischer Schnittdarstellung,
- Fig. 4: einen Innenring und einen Außenring eines zweiten Reibmoduls einer Reibeinrichtung in perspektivischer Einzeldarstellung,
- Fig. 5: eine Reibeinrichtung mit einem ersten Reibmodul und einem zweiten einteiligen Reibmodul, das an einem Mitnahmeabschnitt einer Doppelkupplung radial verlagerbar angeordnet ist, in perspektivischer Schnittdarstellung und
- Fig. 6: ein zweites einteiliges Reibmodul in perspektivischer Darstellung.

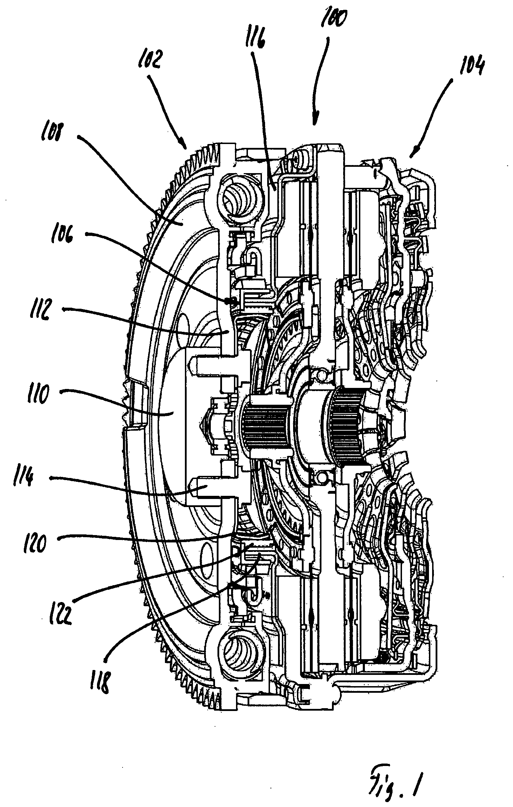

Fig. 1 zeigt eine Drehmomentübertragungseinrichtung 100 mit einem Zweimassenschwungrad 102, einer Doppelkupplung 104 und einer zwischen dem Zweimassenschwungrad 102 und der Doppelkupplung 104 angeordneten Reibeinrichtung 106 zur Dämpfung von Axialschwingungen in perspektivischer Schnittdarstellung. Die Drehmomentübertragungseinrichtung 100 kann in einem Antriebsstrang eines brennkraftmaschinengetriebenen Kraftfahrzeugs angeordnet sein. Die Drehmomentübertragungseinrichtung 100 kann zwischen einer Brennkraftmaschine und einem Getriebe des Kraftfahrzeugs angeordnet sein.

Das Zweimassenschwungrad 102 dient zur Dämpfung von Drehungleichförmigkeiten, insbesondere zur Dämpfung von durch die Brennkraftmaschine angeregten periodischen Drehungleichförmigkeiten. Das Zweimassenschwungrad 102 weist ein Eingangsteil 108 und ein Ausgangsteil auf. Das Eingangsteil 108 und das Ausgangsteil des Zweimassenschwungrads 102 sind relativ zueinander begrenzt verdrehbar. Zwischen dem Eingangsteil 108 und dem Ausgangsteil ist eine Feder-Dämpfer-Einrichtung wirksam. Die Feder-Dämpfer-Einrichtung weist eine Federeinrichtung auf. Die Federeinrichtung weist Bogenfedern auf. Die Feder-Dämpfer-Einrichtung weist eine Reibeinrichtung auf. Das Eingangsteil 108 des Zweimassenschwungrads 102 ist mit einer Ausgangswelle 110 der Brennkraftmaschine fest verbunden. Das Eingangsteil 108 weist einen Scheibenabschnitt 112 auf. Das Eingangsteil 108 ist mit seinem Scheibenabschnitt 112 mithilfe von Schrauben, wie 114, mit der Ausgangswelle 110 der Brennkraftmaschine verschraubt.

Die Doppelkupplung 104 dient dazu, das Getriebe von der Brennkraftmaschine zu trennen oder mit der Brennkraftmaschine zu verbinden und/oder einen Leistungsfluss zwischen Eingangswellen des Getriebes im übergehenden Wechsel zu verlagern. Die Doppelkupplung 104 weist ein Eingangsteil und zwei Ausgangsteile auf. Das Eingangsteil der Doppelkupplung 104 kann wechselnd mit den Ausgangsteilen verbunden werden. Die Doppelkupplung 104 weist zwei Kupplungen auf. Die Doppelkupplung 104 weist eine Betätigungseinrichtung zur Betätigung der Kupplungen auf. Die Betätigungseinrichtung weist Tellerfedern auf. Das Eingangsteil der Doppelkupplung 104 ist mit dem Ausgangsteil des Zweimassenschwungrads 102 verbunden. Das Eingangsteil der Doppelkupplung 104 weist eine Gegendruckplatte, eine Zwischendruckplatte, eine Anpressplatte und ein Gehäuse 116 auf. Das Gehäuse 116 der Doppelkupplung 104 weist einen Mitnahmeabschnitt 118 auf. Das Eingangsteil der Doppelkupplung 104 ist mit seinem Mitnahmeabschnitt 118 mit dem Ausgangsteil des Zweimassenschwungrads 102 verbunden.

Die Reibeinrichtung 106 weist ein erstes Reibmodul 120 und ein zweites Reibmodul 122 auf. Das erste Reibmodul 120 ist mithilfe der Schrauben 114 zusammen mit dem Eingangsteil 108 des Zweimassenschwungrads 102 mit der Ausgangswelle 110 der Brennkraftmaschine verschraubt. Das erste Reibmodul 120 ist an der der Doppelkupplung 104 zugewandten Seite des Eingangsteil 108 des Zweimassenschwungrads 102 angeordnet. Das zweite Reibmodul 122 ist an dem Mitnahmeabschnitt 118 des Eingangsteils der Doppelkupplung 104 angeordnet. Das erste Reibmodul 120 ist radial innerhalb des zweiten Reibmoduls 122 angeordnet. Das erste Reibmodul 120 weist eine Reibfläche auf. Die Reibfläche des ersten Reibmoduls 120 weist einen definierten Reibwert auf. Die Reibfläche des ersten Reibmoduls 120 ist nach radial außen gerichtet. Das zweite Reibmodul 122 weist eine Reibfläche auf. Die Reibfläche des zweiten Reibmoduls 122 weist einen definierten Reibwert auf. Die Reibfläche des zweiten Reibmoduls 122 ist nach radial innen gerichtet. Die Reibflächen des ersten Reibmoduls 120 und des zweiten Reibmoduls 122 sind gegeneinander vorgespannt angeordnet. Eine Vorspannung ist im Wesentlichen mithilfe des ersten Reibmoduls aufgebracht. Es ist eine definierte Vorspannkraft aufgebracht. Die Vorspannkraft ist so bemessen, dass eine axiale Reibkraft zwischen 20 und 200 N liegt. Die Reibflächen des ersten Reibmoduls 120 und des zweiten Reibmoduls 122 bilden eine Reibpaarung. Das erste Reibmodul 120 und das zweite Reibmodul 122 sind zueinander in axialer Richtung verlagerbar. Bei einer Verlagerung des ersten Reibmoduls 120 und des zweiten Reibmoduls 122 zueinander tritt eine Reibkraft auf. Die Reibkraft bewirkt eine Dämpfung von Axialschwingungen.

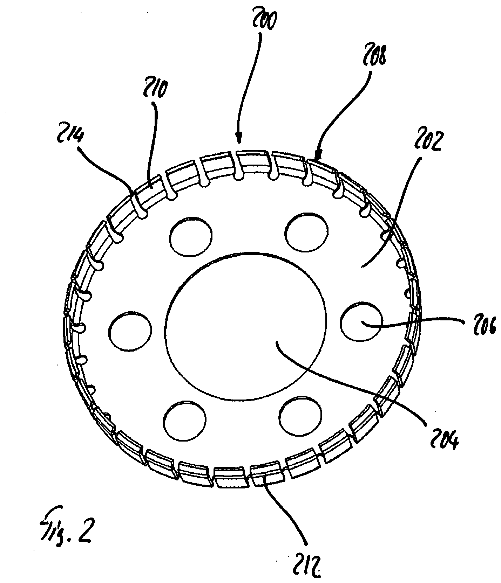

Fig. 2 zeigt ein erstes Reibmodul 200 einer Reibeinrichtung, wie Reibeinrichtung 106 gemäß Fig. 1, in perspektivischer Darstellung. Das erste Reibmodul 200 weist einen Scheibenabschnitt 202 auf. Der Scheibenabschnitt 202 weist eine ringscheibenartige Form auf. Der Scheibenabschnitt 202 weist mittig eine runde Ausnehmung 204 auf. Der Scheibenabschnitt 202 weist mehrere Löcher, wie 206, auf. Die Löcher 206 sind in Umfangsrichtung des Scheibenabschnitts 202 gleichmäßig verteilt angeordnet. Vorliegend weist der Scheibenabschnitt 202 sechs Löcher 206 auf. Die Löcher 206 dienen zur Befestigung des ersten Reibmoduls 200 mithilfe von Schrauben. Das erste Reibmodul 200 weist einen Federabschnitt 208 auf. Der Federabschnitt 208 ist an dem Scheibenabschnitt 202 radial außen angeordnet. Der Federabschnitt 208 weist mehrere Federelemente, wie 210, auf. Die Federelemente 210 weisen jeweils einen Verbindungsabschnitt und einen freien Endabschnitt auf. Die Federelemente 210 sind jeweils mit ihrem Verbindungsabschnitt mit dem Scheibenabschnitt 202 verbunden. Die Federelemente 210 sind in etwa rechtwinklig zu dem Scheibenabschnitt 202 angeordnet. Die Endabschnitte der Federelemente 210 sind jeweils nach radial innen leicht abgewinkelt. Damit weisen die Federelemente 210 jeweils einen nach radial außen gerichteten Anlageabschnitt, wie 212, auf. Zwischen den Federelementen 210 sind jeweils Lücken, wie 214, angeordnet. Die Lücken 214 sind an dem Scheibenabschnitt 202 verrundet ausgeführt. Das erste Reibmodul 200 ist ein Stanz-Biege-Bauteil aus Blech, beispielsweise aus dem Material C75S.

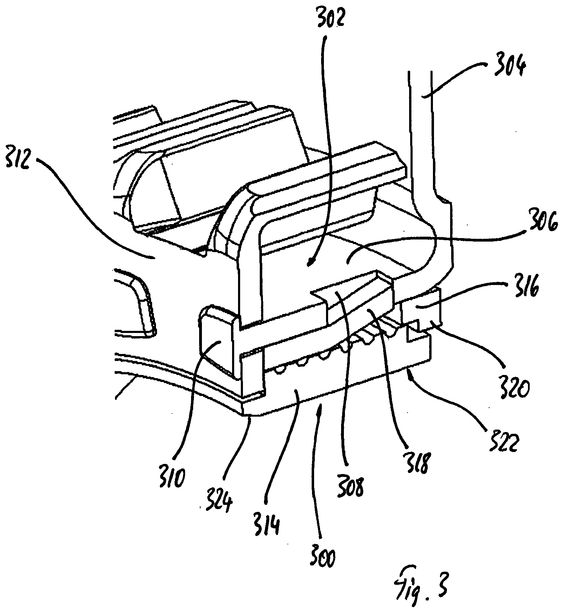

Fig. 3 zeigt ein zweites zweiteiliges Reibmodul 300 einer Reibeinrichtung, wie Reibeinrichtung 106 gemäß Fig. 1, an einem Mitnahmeabschnitt 302 einer Doppelkupplung, wie Doppelkupplung 104 gemäß Fig. 1, in perspektivischer Schnittdarstellung. Die Doppelkupplung weist ein Gehäuse 304 auf. Das Gehäuse 304 weist einen hohlzylindrischen Abschnitt 306 auf. In dem hohlzylindrischen Abschnitt 306 sind mehrere Ausnehmungen, wie 308, angeordnet. Die Ausnehmungen 308 sind über den hohlzylindrischen Abschnitt 306 in Umfangsrichtung verteilt angeordnet. Die Ausnehmungen 308 weisen jeweils eine rechteckartige Form auf. Die Ausnehmungen 308 weisen jeweils Anlageflächen auf. Der hohlzylindrische Abschnitt 306 weist ein freies Ende auf. An dem freien Ende des hohlzylindrischen Abschnitts 306 sind stiftartige Fortsätze, wie 310, angeordnet. Mit dem hohlzylindrischen Abschnitt 306 des Gehäuses 304 ist ein Mitnehmerring 312 fest verbunden. Der Mitnehmerring 312 weist Ausnehmungen auf. Die stiftartigen Fortsätze 310 sind durch diese Ausnehmungen gesteckt. Nachfolgend sind die Enden der Fortsätze 310 derart plastisch verformt, dass der Mitnehmerring 312 und das Gehäuse 304 der Doppelkupplung fest miteinander verbunden sind.

Das zweite Reibmodul 300 weist einen Innenring 314 und einen Außenring 316 auf. Der hohlzylindrische Abschnitt 306 des Gehäuses 304 weist eine radial innere Oberfläche auf. Der Außenring 316 weist eine radial äußere Oberfläche auf. Der Außenring 316 ist mit seiner radial äußeren Oberfläche an der radial inneren Oberfläche des hohlzylindrischen Abschnitts 306 angeordnet. Die Durchmesser der radial inneren Oberfläche des hohlzylindrischen Abschnitts 306 und der radial äußeren Oberfläche des Außenrings 316 korrespondieren. Der Außenring 316 weist nach radial außen vorstehende Rastnasen, wie 318, auf. Der Außenring 316 ist in den hohlzylindrischen Abschnitt 306 des Gehäuses 304 so weit eingeschoben, dass er in axialer Richtung an dem Mitnehmerring 312 ansteht. Die Rastnasen 318 verrasten jeweils in den Ausnehmungen 308 und liegen an den Anlageflächen der Ausnehmungen 308 an. Damit ist der Außenring 316 in axialer Richtung und in Umfangsrichtung an dem hohlzylindrischen Abschnitt 306 des Gehäuses 304 gehalten. An seinem von dem Mitnehmerring 312 abgewandten Ende weist der Außenring 316 eine nach radial innen vorstehende Anlageschulter 320 auf.

Der Innenring 314 ist radial innerhalb des Außenrings 316 angeordnet. Der Außenring 316 weist eine radial innere Oberfläche auf. Der Innenring 314 weist eine radial äußere Oberfläche auf. Der Innenring 314 ist mit seiner radial äußeren Oberfläche an der radial inneren Oberfläche des Außenrings 316 angeordnet. Die Durchmesser der radial inneren Oberfläche des Außenrings 316 und der radial äußeren Oberfläche des Innenrings 314 korrespondieren. Der Innenring 314 weist an seinen axialen Enden nutartige Ausnehmungen auf. Eine der Ausnehmungen des Innenrings 314 dient zur Anlage an dem Mitnehmerring 312. Die andere Ausnehmung des Innenrings 314 dient zur Anlage an der Anlageschulter 320 der Außenrings 316. Der Innenring 314 ist in axialer Richtung zwischen dem Mitnehmerring 312 und der Anlageschulter 320 des Außenrings 316 spielbehaftet aufgenommen. Damit kann sich der Innenring 314 in axialer Richtung relativ zu dem Außenring 316 begrenz bewegen. Das Spiel beträgt ca. 1 mm. Der Innenring 314 und der Außenring 316 bilden eine Gleitpaarung. Der Innenring 314 ist zu dem Außenring 316 um 360° verdrehbar. Zwischen dem Innenring 314 und dem Außenring 316 ist eine Reibung in axialer Richtung größer als eine Reibung in Umfangsrichtung.

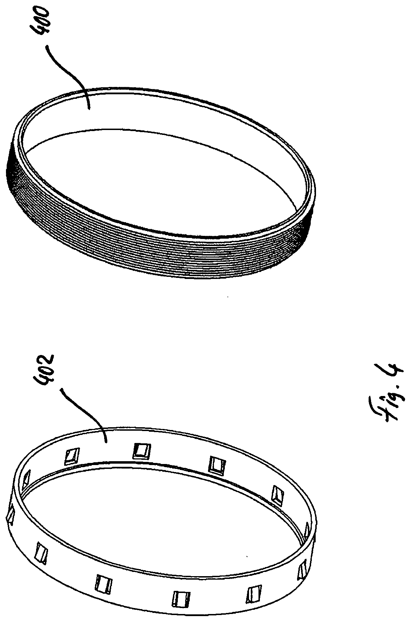

Der Innenring 314 weist eine radial innere Oberfläche 322 auf. Die radial innere Oberfläche 322 des Innenrings 314 dient dazu, mit einer radial äußeren Oberfläche eines ersten Reibmoduls, wie erstes Reibmodul 200 gemäß Fig. 2, der Reibeinrichtung, wie Reibeinrichtung 106 gemäß Fig. 1, eine Reibpaarung zu bilden. Der Innenring 314 weist radial innenseitig an seiner dem Mitnehmerring 312 zugewandten Seite eine Schräge 324 auf. Der Innenring 314 weist radial innenseitig eine kufenartige Form auf. Fig. 4 zeigt einen Innenring 400, wie Innenring 314 gemäß Fig. 3, und einen Außenring 402, wie Außenring 316 gemäß Fig. 3, eines zweiten Reibmoduls, wie zweites Reibmodul 300 gemäß Fig. 3, einer Reibeinrichtung, wie Reibeinrichtung 106 gemäß Fig. 1, in perspektivischer Einzeldarstellung.

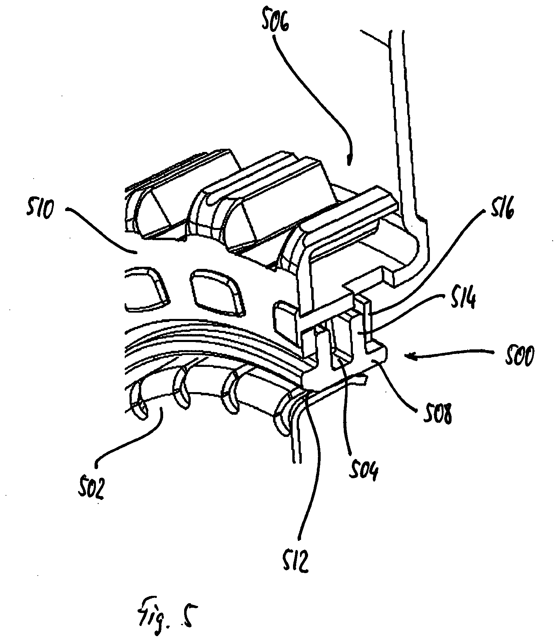

Fig. 5 zeigt eine Reibeinrichtung 500 mit einem ersten Reibmodul 502, wie erstes Reibmodul 200 gemäß Fig. 2, und einem zweiten einteiligen Reibmodul 504, das an einem Mitnahmeabschnitt 506 einer Doppelkupplung radial verlagerbar angeordnet ist, in perspektivischer Schnittdarstellung. Das Reibmodul 504 weist eine Ringform auf. Das Reibmodul 504 weist einen radial inneren Abschnitt 508 auf. Der radial innere Abschnitt 508 dient dazu, mit einer radial äußeren Oberfläche des ersten Reibmoduls 502 eine Reibpaarung zu bilden. Der radial innere Abschnitt 508 weist radial innenseitig an seiner einem Mitnehmerring 510 zugewandten Seite eine Schräge 512 auf. Das Reibmodul 504 weist radial innenseitig eine kufenartige Form auf. Das Reibmodul 504 weist einen radial äußeren Abschnitt 514 auf. Der radial äußere Abschnitt 514 dient zur Verbindung des Reibmoduls 504 mit dem Mitnahmeabschnitt 506 der Doppelkupplung. Das Reibmodul 504 weist einen U-artigen Querschnitt mit zwei Schenkeln auf. Die Schenkel erstrecken sich ausgehend von dem radial inneren Abschnitt 508 nach radial außen. Die Schenkel bilden den radial äußeren Abschnitt 514 des Reibmoduls 504.

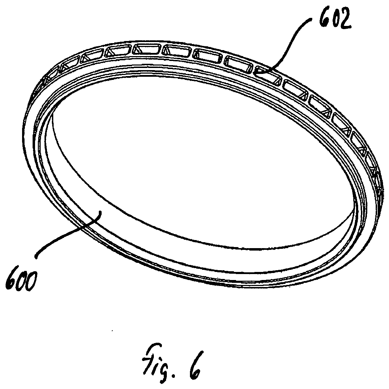

Das zweite Reibmodul 504 ist mit seinem radial äußeren Abschnitt 514 zwischen dem Mitnehmerring 510 und einer Stützfeder 516 gehalten. Die Stützfeder 516 weist eine ringscheibenartige Form auf. Die Stützfeder 516 ist ein Blechteil, beispielsweise aus dem Material C75S. Mithilfe der Stützfeder 516 ist das Reibmodul 504 gegen den Mitnehmerring 510 vorgespannt. Ein äußerer Durchmesser des zweiten Reibmoduls 504 ist kleiner als ein innerer Durchmesser eines hohlzylindrischen Abschnitts 306 eines Gehäuses 304 der Doppelkupplung. Damit ist das zweite Reibmodul 504 in radialer Richtung relativ zu dem Mitnehmerring 510 und der Stützfeder 516 verlagerbar. Bei einer Verlagerung des zweiten Reibmoduls 504 in radialer Richtung gleiten die Schenkel des radial äußeren Abschnitts 514 an dem Mitnehmerring 510 bzw. an der Stützfeder 516. Im Übrigen wird ergänzend insbesondere auf Fig. 1 und Fig. 3 sowie die zugehörige Beschreibung verwiesen. Fig. 6 zeigt ein zweites einteiliges Reibmodul 600, wie zweites Reibmodul 504 gemäß Fig. 5, in perspektivischer Einzeldarstellung. Es ist ersichtlich, dass zwischen den Schenkeln des radial äußeren Abschnitts umlaufend mehrere Zwischenwände, wie 602, angeordnet sind. Das zweite Reibmodul 600 ist aus einem Kunststoff, beispielsweise aus PA6, hergestellt. Das zweite Reibmodul 600 weist ein Gewicht von ca. 180-280 g, insbesondere von ca. 230 g, auf.

### Bezugszeichenliste

- 100: Drehmomentübertragungseinrichtung
- 102: Zweimassenschwungrad
- 104: Doppelkupplung
- 106: Reibeinrichtung
- 108: Eingangsteil
- 110: Ausgangswelle
- 112: Scheibenabschnitt
- 114: Schraube
- 116: Gehäuse
- 118: Mitnahmeabschnitt
- 120: Reibmodul
- 122: Reibmodul

- 200: Reibmodul
- 202: Scheibenabschnitt
- 204: Ausnehmung
- 206: Loch
- 208: Federabschnitt
- 210: Federelement
- 212: Anlageabschnitt
- 214: Lücke

- 300: Reibmodul
- 302: Mitnahmeabschnitt
- 304: Gehäuse
- 306: Abschnitt
- 308: Ausnehmung
- 310: Fortsatz
- 312: Mitnehmerring
- 314: Innenring
- 316: Außenring
- 318: Rastnase
- 320: Anlageschulter
- 322: Oberfläche
- 324: Schräge

- 400: Innenring
- 402: Außenring

- 500: Reibeinrichtung
- 502: Reibmodul
- 504: Reibmodul
- 506: Mitnahmeabschnitt
- 508: Abschnitt
- 510: Mitnehmerring
- 512: Schräge
- 514: Abschnitt
- 516: Stützfeder

- 600: Reibmodul
- 602: Zwischenwand

## Patentansprüche

1. Drehmomentübertragungseinrichtung (100) für einen Antriebsstrang eines brennkraftmaschinengetriebenen Kraftfahrzeugs aufweisend einen Drehschwingungsdämpfer (102), insbesondere ein Zweimassenschwungrad, eine Reibungskupplungseinrichtung (104), insbesondere eine Doppelkupplung, und eine zwischen dem Drehschwingungsdämpfer (102) und der Reibungskupplungseinrichtung (104) angeordnete Reibeinrichtung (106, 500), wobei die Reibeinrichtung (106, 500) zur Dämpfung von Axialschwingungen wirksam ist und die Reibeinrichtung (106, 500) ein erstes Reibmodul (120, 200, 502), das dem Drehschwingungsdämpfer (102) zugeordnet ist, und ein zweites Reibmodul (122, 300, 504, 600), das der Reibungskupplungseinrichtung (104) zugeordnet ist, aufweist und das erste Reibmodul (120, 200, 502) und das zweite Reibmodul (122, 300, 504, 600) in axialer Richtung relativ zueinander verlagerbar sind, **dadurch gekennzeichnet, dass** der Drehschwingungsdämpfer (102) ein Eingangsteil (108) aufweist, das mithilfe wenigstens eines Verbindungsmittels (114) mit der Brennkraftmaschine verbunden ist und das erste Reibmodul (120, 200, 502) mithilfe des wenigstens einen Verbindungsmittels (114) mit dem Eingangsteil (108) des Drehschwingungsdämpfers (102) verbunden ist.

2. Drehmomentübertragungseinrichtung (100) nach Anspruch 1, **dadurch gekennzeichnet, dass** das erste Reibmodul (120, 200, 502) einen Scheibenabschnitt (202) und einen an dem Scheibenabschnitt (202) radial außen angeordneten Federabschnitt (208) aufweist.

3. Drehmomentübertragungseinrichtung (100) nach einem der vorhergehenden Ansprüche, **dadurch gekennzeichnet, dass** die Reibungskupplungseinrichtung (104) ein Eingangsteil mit einem Mitnahmeabschnitt (118, 302, 506) aufweist und das zweite Reibmodul (122, 300, 504, 600) an dem Mitnahmeabschnitt (118, 302, 506) angeordnet oder ausgebildet ist.

4. Drehmomentübertragungseinrichtung (100) nach einem der Ansprüche 1 oder 3, **dadurch gekennzeichnet, dass** das zweite Reibmodul (122, 300, 504, 600) eine ringartige Form aufweist.

5. Drehmomentübertragungseinrichtung (100) nach Anspruch 3, **dadurch gekennzeichnet, dass** das zweite Reibmodul (504, 600) in radialer Richtung relativ zu dem Mitnahmeabschnitt (506) verlagerbar angeordnet ist.

6. Drehmomentübertragungseinrichtung (100) nach einem der Ansprüche 3 oder 5, **dadurch gekennzeichnet, dass** an dem Mitnahmeabschnitt (506) ein Mitnahmering (510) und eine Stützfeder (516) angeordnet sind und das zweite Reibmodul (504, 600) zwischen dem Mitnahmering (510) und der Stützfeder (516) angeordnet ist.

7. Drehmomentübertragungseinrichtung (100) nach einem der Ansprüche 1 oder 3 bis 6, **dadurch gekennzeichnet, dass** das zweite Reibmodul (122, 300) einen Außenring (316, 402) und einen zu dem Außenring (316, 402) relativ verdrehbaren Innenring (314, 400) aufweist.

8. Drehmomentübertragungseinrichtung (100) nach Anspruch 7, **dadurch gekennzeichnet, dass** der Außenring (316, 402) an dem Mitnahmeabschnitt (118, 302) angeordnet ist und den Innenring (314, 400) in axialer Richtung sichert.

## Claims

1. Torque transmission device (100) for a drive train of a motor vehicle which is operated by internal combustion engine, having a torsional vibration damper (102), in particular a dual-mass flywheel, a friction clutch device (104), in particular a double clutch, and a friction device (106, 500) which is arranged between the torsional vibration damper (102) and the friction clutch device (104), the friction device (106, 500) being active to damp axial vibrations, and the friction device (106, 500) having a first friction module (120, 200, 502) which is assigned to the torsional vibration damper (102) and a second friction module (122, 300, 504, 600) which is assigned to the friction clutch device (104), and it being possible for the first friction module (120, 200, 502) and the second friction module (122, 300, 504, 600) to be moved relative to one another in the axial direction, **characterized in that** the torsional vibration damper (102) has an input part (108) which is connected to the internal combustion engine with the aid of at least one connecting means (114), and the first friction module (120, 200, 502) is connected to the input part (108) of the torsional vibration damper (102) with the aid of the at least one connecting means (114).

2. Torque transmission device (100) according to Claim 1, **characterized in that** the first friction module (120, 200, 502) has a disc section (202) and a spring section (208) which is arranged on the disc section (202) radially on the outside.

3. Torque transmission device (100) according to either of the preceding claims, **characterized in that** the friction clutch device (104) has an input part with a driving section (118, 302, 506), and the second friction module (122, 300, 504, 600) is arranged or configured on the driving section (118, 302, 506).

4. Torque transmission device (100) according to either of Claims 1 and 3, **characterized in that** the second friction module (122, 300, 504, 600) has a ring-like shape.

5. Torque transmission device (100) according to Claim 3, **characterized in that** the second friction module (504, 600) is arranged such that it can be moved relative to the driving section (506) in the radial direction.

6. Torque transmission device (100) according to either of Claims 3 and 5, **characterized in that** a driving ring (510) and a supporting spring (516) are arranged on the driving section (506), and the second friction module (504, 600) is arranged between the driving ring (510) and the supporting spring (516).

7. Torque transmission device (100) according to one of Claims 1 or 3 to 6, **characterized in that** the second friction module (122, 300) has an outer ring (316, 402) and an inner ring (314, 400) which can be rotated relative to the outer ring (316, 402).

8. Torque transmission device (100) according to Claim 7, **characterized in that** the outer ring (316, 402) is arranged on the driving section (118, 302) and secures the inner ring (314, 400) in the axial direction.

## Revendications

1. Dispositif (100) de transfert du couple de rotation du train d'entraînement d'un véhicule automobile entraîné par un moteur à combustion interne, le dispositif présentant un amortisseur (102) d'oscillations en rotation, en particulier un volant d'inertie à deux masses, un dispositif (104) d'embrayage à friction, en particulier un double embrayage, et un dispositif de friction (106, 500) disposé entre l'amortisseur (102) d'oscillations en rotation et le dispositif (104) d'embrayage à friction, le dispositif de friction (106, 500) agissant pour amortir des vibrations axiales et le dispositif de friction (106, 500) présentant un premier module de friction (120, 200, 502) associé à l'amortisseur (102) d'oscillations en rotation et un deuxième module de friction (122, 300, 504, 600) associé au dispositif (104) d'embrayage à friction, le premier module de friction (120, 200, 502) et le deuxième module de friction (122, 300, 504, 600) pouvant être déplacés l'un par rapport à l'autre dans la direction axiale, **caractérisé en ce que**
l'amortisseur (102) d'oscillations en rotation présente une pièce d'entrée (108) reliée au moteur à combustion interne à l'aide d'au moins un moyen de liaison (114) et
**en ce que** le premier module de friction (120, 200, 502) est relié à la pièce d'entrée (108) de l'amortisseur (102) d'oscillations en rotation au moyen du ou des moyens de liaison (114).

2. Dispositif (100) de transfert du couple de rotation selon la revendication 1, **caractérisé en ce que** le premier module de friction (120, 200, 502) présente une section (202) en disque et une section élastique (208) disposée radialement à l'extérieur de la section (202) en disque.

3. Dispositif (100) de transfert du couple de rotation selon l'une des revendications précédentes, **caractérisé en ce que** le dispositif (104) d'embrayage à friction présente une pièce d'entrée présentant une section d'entraînement (118, 302, 506) et **en ce que** le deuxième module de friction (122, 300, 504, 600) est disposé ou configuré sur la section d'entraînement (118, 302, 506).

4. Dispositif (100) de transfert du couple de rotation selon l'une des revendications 1 ou 3, **caractérisé en ce que** le deuxième module de friction (122, 300, 504, 600) présente une forme annulaire.

5. Dispositif (100) de transfert du couple de rotation selon la revendication 3, **caractérisé en ce que** le deuxième module de friction (504, 600) est disposé de manière à pouvoir se déplacer dans la direction radiale par rapport à la section d'entraînement (506).

6. Dispositif (100) de transfert du couple de rotation selon l'une des revendications 3 ou 5, **caractérisé en ce qu'**un anneau d'entraînement (510) et un ressort de soutien (516) sont disposés sur la section d'entraînement (506) et **en ce que** le deuxième module de friction (504, 600) est disposé entre l'anneau d'entraînement (510) et le ressort de soutien (516).

7. Dispositif (100) de transfert du couple de rotation selon l'une des revendications 1 ou 3 à 6, **caractérisé en ce que** le deuxième module de friction (122, 300) présente un anneau extérieur (316, 402) et un anneau intérieur (314, 400) apte à tourner par rapport à l'anneau extérieur (316, 402).

8. Dispositif (100) de transfert du couple de rotation selon la revendication 7, **caractérisé en ce que** l'anneau extérieur (316, 402) est disposé sur la section d'entraînement (118, 302) et bloque l'anneau intérieur (314, 400) dans la direction axiale.
